# EUROPEAN PATENT APPLICATION

(11) **EP 4 641 165 A1**
(43) Date of publication of application: **29.10.2025**
(21) Application number: 23906526.1
(22) Date of filing: 10.11.2023
(51) Int. Cl.: G01N 1/28, G01N 1/31

(54) **MOUNTING PLATFORM AND SAMPLE PROCESSING SYSTEM**

(30) Priority: 23.12.2022 JP 2022207178
(71) Applicant: HITACHI HIGH-TECH CORPORATION, Tokyo 105-6409 (JP)
(72) Inventor: SEKINE, Ryota, Tokyo 105-6409 (JP); SUGIYAMA, Hidetoshi, Tokyo 105-6409 (JP); ENDO, Masashi, Tokyo 105-6409 (JP)
(74) Representative: Strehl & Partner mbB
(86) International application number: PCT/JP2023/040634
(87) International publication number: WO 2024/135155

(57) **Abstract**

A placement table for placing the slide glass 1 transported by using a transport mechanism includes a base 21 having a flat plate shape, and a plurality of support portions 22 and a plurality of guide pins 23 provided on an upper surface of the base 21. The plurality of support portions 22 are provided to support a lower surface (1b) of the slide glass **1.** The plurality of guide pins 23 are used to surround each side surface 1s of the slide glass 1 in a plan view. The plurality of guide pins 23 are each formed in a columnar shape, and are positioned closer to an outer peripheral side of the base 21 than the plurality of support portions 22.

## Description

### Technical Field

The present invention relates to a placement table and a sample processing system, and more particularly to a placement table for placing a slide glass and a sample processing system provided with the placement table.

### Background Art

In a pathological examination, a biological sample such as tissue or blood is placed on a slide glass, a specimen slide for microscopic observation is produced by performing staining processing on the biological sample, and diagnosis is performed from a microscopic observation image of the specimen slide. In the preparation of the specimen slide, many steps are performed, such as collection of a tissue, fixing for storing the tissue, embedding for solidifying the tissue with paraffin which is a waxy substance having a melting point of 50 to 70°C, slicing, attachment of a slice to the slide glass, dropping and washing of a plurality of staining reagents, and sealing with a cover glass.

Therefore, in recent years, a device for automating the preparation of a specimen slide has been developed. In particular, a unit that processes a plurality of steps without human intervention and a system including a plurality of units require a transport mechanism for transporting a slide glass in each unit or between units.

PTL 1 discloses a slide glass transport container. The slide glass transport container is implemented in the form of a trough including a base and a partition wall surrounding an outer periphery of the base. The slide glass transport container is provided with a raised portion that rises from the base. The slide glass is placed on a step provided on the partition wall and on the raised portion.

PTL 2 discloses a slide holder for a chromosome specimen spreading device. A concave slide holder that allows the slide glass is provided, and the slide holder has the same shape as the slide glass and is formed larger than the slide glass. In addition, through holes are provided at both end portions of the slide holder, and the through holes serve as spaces for a slide gripper to slip into a lower portion of the slide glass.

### Citation List

### Patent Literature

PTL 1: JP4026686
PTL 2: JP4043288

### Summary of Invention

### Technical Problem

Since PTL 1 intends to transport the slide glass together with a transport container (placement table), there is a problem that it is difficult to take out the slide glass placed in the transport container from the transport container using the device.

In PTL **2,** a recess having substantially the same shape as the slide glass is formed in a slide holder (placement table). A dimension of the recess is larger than a dimension of the slide glass, and the slide glass is placed in the recess. Therefore, a contact area between the slide glass and the slide holder is large. Therefore, when a liquid or paraffin is present between the slide glass and the slide holder, an adhesive force between the slide glass and the slide holder is strong, and it is difficult to take out the slide glass from the slide holder.

When preparing a specimen slide, a paraffin-embedded specimen is sliced, and the slice is attached to a slide glass. In order to improve attachment between the slide glass and the specimen, there is a case where the specimen slide is placed on a staining device after heat processing called baking is performed. In this case, the paraffin melts and resolidifies on the device after the insertion, and thus there is a problem that the slide glass is attached to a placement table for the slide glass of the device.

A main object of the present application is to provide a placement table that can prevent attachment of a slide glass and easily take out the slide glass by a transport mechanism. In addition, a sample processing system provided with such a placement table is provided.

Other technical problems and novel features will become apparent from description of the present description and the accompanying drawings.

### Solution to Problem

A placement table according to an embodiment is a placement table for placing a slide glass transported by using a transport mechanism. The placement table includes a base, a plurality of support portions provided on the base to support a lower surface of the slide glass, and a plurality of guide pins provided on the base to surround respective side surface of the slide glass. Here, each of the plurality of guide pins is formed in a columnar shape.

A placement table according to an embodiment is a placement table for placing a slide glass transported by using a transport mechanism. The placement table includes a base, a plurality of support tables provided on the base to support a lower surface of the slide glass, and a plurality of guide pins provided on the base to surround respective side surface of the slide glass. The plurality of support tables are provided at positions corresponding to respective corner portions of the slide glass having a rectangular shape, and a contact area between each of the plurality of support tables and the lower surface of the slide glass is 15 mm² or less.

### Advantageous Effects of Invention

According to one embodiment, it is possible to provide a placement table capable of preventing attachment of a slide glass and easily taking out the slide glass by a transport mechanism. In addition, it is possible to provide a sample processing system provided with such a placement table.

### Brief Description of Drawings

[FIG. 1] FIG. 1 is a plan view showing an outline of a sample processing system according to Embodiment 1.
[FIG. 2] FIG. 2 is a front view showing an outline of the sample processing system according to Embodiment 1.
[FIG. 3] FIG. 3 is a plan view showing a slide tray on which a plurality of placement tables are mounted according to Embodiment 1.
[FIG. 4] FIG. 4 is a plan view showing a transport line on which a placement table is mounted according to Embodiment 1.
[FIG. 5] FIG. 5 is a perspective view showing a transport mechanism according to Embodiment 1.
[FIG. 6] FIG. 6 is a front view showing a finger portion according to Embodiment 1.
[FIG. 7] FIG. 7 is a plan view showing the finger portion according to Embodiment 1.
[FIG. 8] FIG. 8 is a plan view showing the placement table, a slide glass, and the finger portion according to Embodiment 1.
[FIG. 9] FIG. 9 is a front view showing the placement table, the slide glass, and the finger portion according to Embodiment 1.
[FIG. 10] FIG. 10 is a right side view showing the placement table, the slide glass, and the finger portion according to Embodiment 1.
[FIG. 11A] FIG. 11A is a front view showing a transport step of the slide glass according to Embodiment 1.
[FIG. 11B] FIG. 11B is a front view showing a transport step subsequent to FIG. 11A.
[FIG. 11C] FIG. 11C is a front view showing a transport step subsequent to FIG. 11B.
[FIG. 11D] FIG. 11D is a front view showing a transport step subsequent to FIG. 11C.
[FIG. 11E] FIG. 11E is a front view showing a transport step subsequent to FIG. 11D.
[FIG. 12] FIG. 12 is a plan view showing a placement table, a slide glass, and a finger portion according to a modification.
[FIG. 13] FIG. 13 is a right side view showing the placement table, the slide glass, and the finger portion according to the modification.
[FIG. 14] FIG. 14 is a plan view showing a placement table, a slide glass, and a finger portion according to Embodiment **2.**
[FIG. 15] FIG. 15 is a front view showing the placement table, the slide glass, and the finger portion according to Embodiment 2.
[FIG. 16] FIG. 16 is a right side view showing the placement table, the slide glass, and the finger portion according to Embodiment 2.
[FIG. 17] FIG. 17 is a plan view showing a placement table, a slide glass, and a finger portion according to Embodiment 3.
[FIG. 18] FIG. 18 is a front view showing the placement table, the slide glass, and the finger portion according to Embodiment 3**.**
[FIG. 19] FIG. 19 is a right side view showing the placement table, the slide glass, and the finger portion according to Embodiment 3.

### Description of Embodiments

Hereinafter, embodiments will be described in detail with reference to the drawings. In all the drawings for describing the embodiments, members having the same function are denoted by the same reference numeral, and the repeated description thereof is omitted. In the following embodiments, the description of the same or similar parts will not be repeated in principle unless particularly necessary.

An X direction, a Y direction, and a Z direction to be described in the present application intersect with one another and are orthogonal to one another. In the present application, an X1 direction in the X direction is a right direction, an X2 direction in the X direction is a left direction, a Y1 direction in the Y direction is a front direction, a Y2 direction in the Y direction is a rear direction, a Z1 direction in the Z direction is an upper direction, and a Z2 direction in the Z direction is a lower direction.

In the present application, the Z2 direction may be described as a height direction or a thickness direction of a structure. Expressions such as "plan view" or "top view" used in the present application mean that a surface formed by the X1 direction or the X2 direction and the Y1 direction or the Y2 direction is defined as a "plane" and the "plane" is viewed from the Z1 direction.

### (Embodiment 1)

### <Configuration of Sample Processing System>

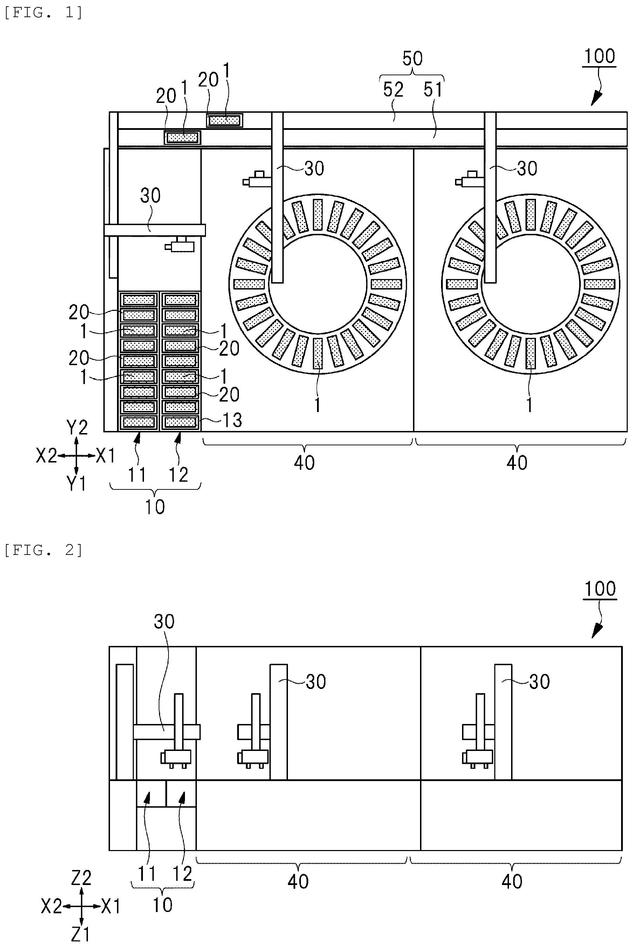

Hereinafter, a sample processing system 100 according to Embodiment 1 will be described with reference to FIGS. 1 to 7. A sample is placed on a slide glass 1 to be used in Embodiment 1. The sample is, for example, a sample to be used in a pathological examination, and is a biological sample such as tissue or blood. The sample processing system 100 constitutes a part of an inspection device such as a pathological staining device.

As shown in FIGS. 1 and 2, the sample processing system 100 includes an inserting and storage unit 10, a plurality of placement tables 20, a plurality of transport mechanisms 30, a staining unit 40, and a transport line 50.

The staining unit 40 includes a disk, a reagent supply unit, and the like, and is provided to perform staining processing on a sample placed on the slide glass 1. The slide glass 1 is placed on the disk, and the sample placed on the slide glass 1 is stained with a reagent from the reagent supply unit. As a staining method to be used in the staining unit 40, for example, HE staining, immunohistochemical staining, or in-situ hybridization staining can be applied.

In Embodiment 1, the sample processing system 100 includes two staining units 40, but the sample processing system 100 may include a cover slip sealing unit, a slide glass imaging unit, and the like in addition to the staining units 40.

The inserting and storage unit 10 includes an inserting mechanism 11, a storage mechanism 12, and a plurality of slide trays 13. The inserting mechanism 11 is provided to store the slide glass 1 before the staining processing is performed. The storage mechanism 12 is provided to store the slide glass 1 after the staining processing is performed.

The inserting mechanism 11 and the storage mechanism 12 are each provided with a slide tray 13. The plurality of placement tables 20 are mounted on the slide tray 13. The placement table 20 is provided to place the slide glass 1 transported by using the transport mechanism 30. Although not shown here, the plurality of slide trays 13 are stacked in the Z direction in the inserting mechanism 11 and the storage mechanism 12. The plurality of slide trays 13 can be moved in the Y1 direction and the Y2 direction by a moving mechanism provided in the inserting and storage unit 10.

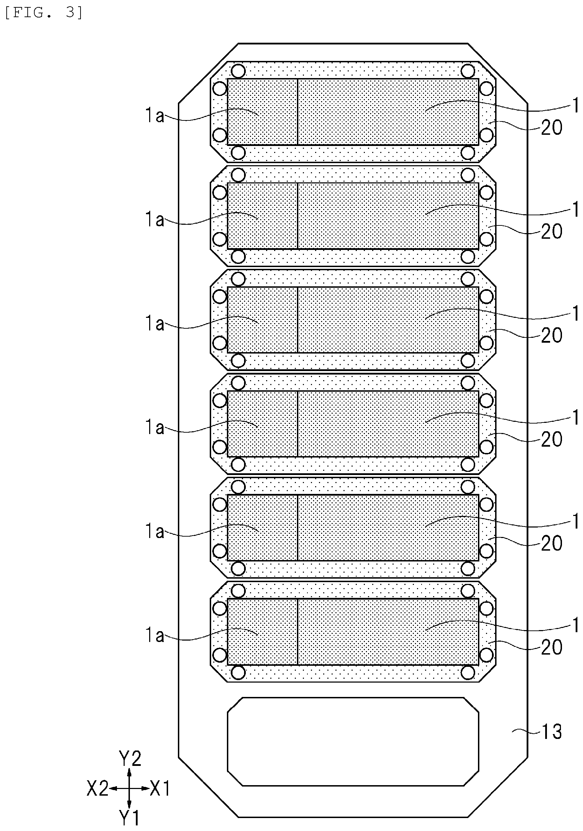

As shown in FIG. 3, the plurality of placement tables 20 are mounted on the slide tray 13, and a slide glass 1 is placed on each of the plurality of placement tables 20. A label or the like is attached to each slide glass 1, and an identification code 1a indicating information of each sample is provided on the label. Although not shown here, the inserting and storage unit 10 is provided with an identification code reader, and information included in the identification code 1a of each slide glass 1 is read by the identification code reader. As the identification code 1a, for example, a barcode, a two-dimensional code, or RFID can be applied. In the following description, illustration of the identification code 1a is omitted.

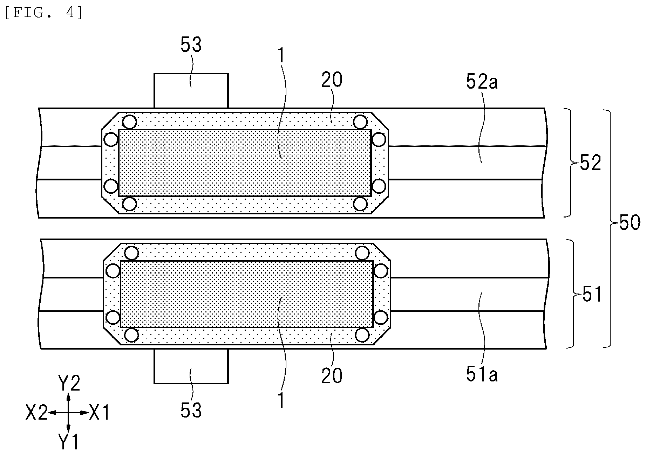

As shown in FIGS. 1 and 4, the sample processing system 100 includes the transport line 50 for transporting the slide glass 1 between the inserting and storage unit 10 and the staining unit 40. The transport line 50 includes an inserting line 51 and a storage line 52. The placement table 20 is mounted on each of the inserting line 51 and the storage line 52.

The inserting line 51 is used when the slide glass 1 before the staining processing is transported from the inserting mechanism 11 to the staining unit 40. The storage line 52 is used when the slide glass 1 after the staining processing is transported from the staining unit 40 to the storage mechanism 12. The inserting line 51 is provided with a guide 51a, and the storage line 52 is provided with a guide 52a. Each of the inserting line 51 and the storage line 52 is provided with an actuator 53.

The placement table 20 on which the slide glass 1 is placed can be moved in the X1 direction or the X2 direction along the guide 51a or the guide 52a by a control unit (not shown) and the actuator 53, and can be moved to the vicinity of the inserting and storage unit 10 or the vicinity of the staining unit 40. By making a long side of the placement table 20 parallel to an extending direction of the inserting line 51 and the storage line 52, an occupied area of the inserting line 51 and the storage line 52 can be reduced.

The plurality of placement tables 20 may be mounted on each of the inserting line 51 and the storage line 52. Here, the case in which the transport line 50 has the separate inserting line 51 and the storage line 52 is exemplified, but the transport line 50 may be implemented such that only one line serves as both the inserting line 51 and the storage line 52.

As shown in FIGS. 1 and 2, the sample processing system 100 includes the plurality of transport mechanisms 30**.** At least one transport mechanism 30 is provided in each of the inserting and storage unit 10 and the staining unit 40. The slide glass 1 is transported between the units by these transport mechanisms 30.

That is**,** the transport of the slide glass 1 from the placement table 20 of the inserting and storage unit 10 (the inserting mechanism 11) to the placement table 20 of the transport line 50 (the inserting line 51), the transport of the slide glass 1 from the placement table 20 of the transport line 50 (the inserting line 51) to the staining unit 40, the transport of the slide glass 1 from the staining unit 40 to the placement table 20 of the transport line 50 (the storage line 52)**,** and the transport of the slide glass 1 from the placement table 20 of the transport line 50 (the storage line 52) to the placement table 20 of the inserting and storage unit 10 (the storage mechanism 12) are performed by the plurality of transport mechanisms **30.**

### <Configuration of Transport Mechanism>

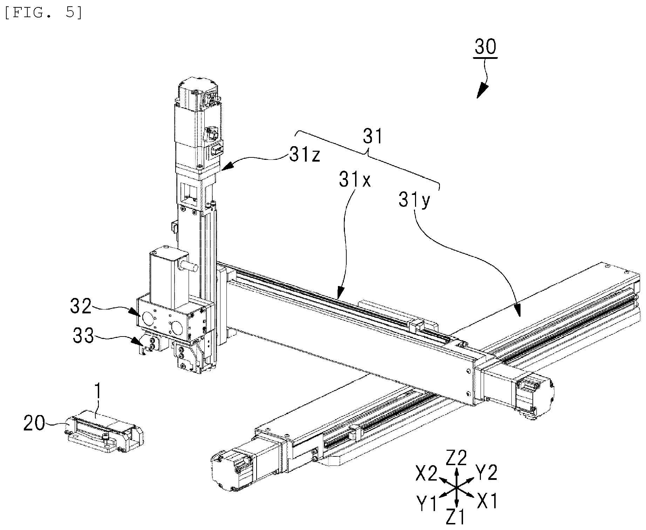

As shown in FIG. 5, the transport mechanism 30 includes a transport drive unit **31,** a finger drive unit **32,** and a plurality of finger portions **33.** The transport drive unit 31 and the finger drive unit 32 are controlled by a control unit (not shown).

The transport drive unit 31 includes an X transport shaft 31x, a Y transport shaft 31y, and a Z transport shaft 31z. The finger drive unit 32 and the plurality of finger portions 33 can be moved in the X1 direction and the X2 direction by the X transport shaft 31x. The finger drive unit 32 and the plurality of finger portions 33 can be moved in the Y1 direction and the Y2 direction by the Y transport shaft 31y. The finger drive unit 32 and the plurality of finger portions 33 can be moved in the Z1 direction and the Z2 direction by the Z transport shaft 31z. In order for the plurality of finger portions 33 to grip the slide glass 1, at least the Z transport shaft 31z may be provided.

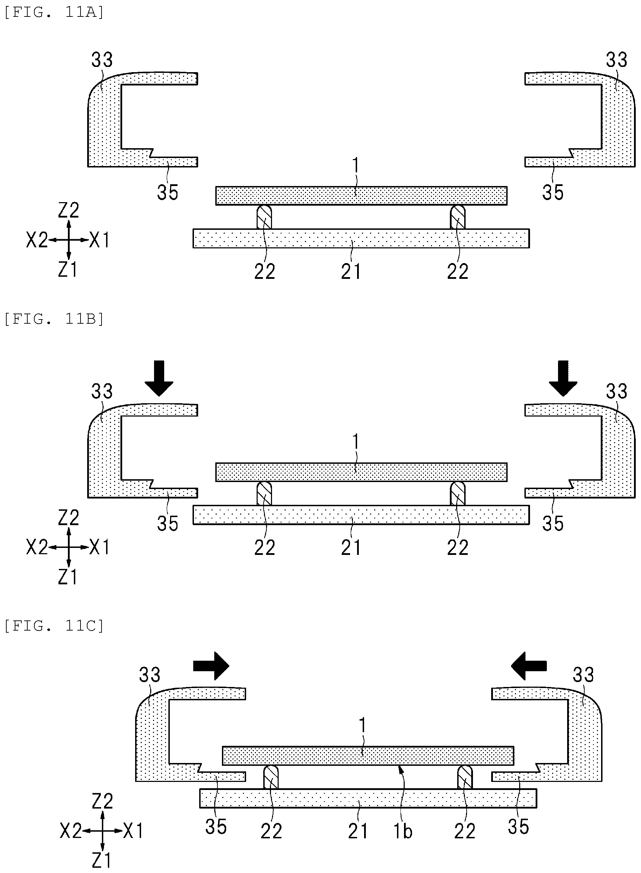

The finger drive unit 32 performs a gripping operation of the plurality of finger portions 33. In Embodiment 1, for example, four finger portions 33 are provided. Such a gripping operation of the plurality of finger portions 33 will be described in detail later with reference to FIGS. 11A to 11E.

The slide glass 1 has a polygonal shape in a plan view, and here has a rectangular shape in a plan view. During the transport of the slide glass 1, two side surfaces 1s of short sides of the slide glass 1 are gripped by the transport mechanism 30. A thickness of the slide glass 1 in the Z direction is, for example, 1.0 mm or more and 1.1 mm or less.

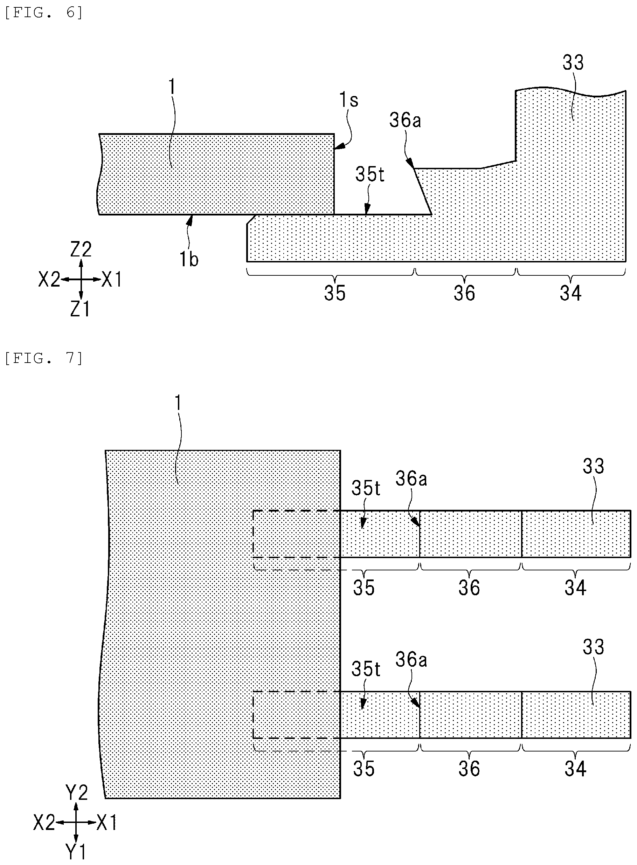

FIGS. 6 and 7 are enlarged views showing a state in which one of the two side surfaces 1s of the short sides of the slide glass 1 is gripped by the two finger portions 33. As shown in FIGS. 6 and 7, each of the plurality of finger portions 33 includes a body portion 34, a placement portion 35, and a gripping portion 36. The gripping portion 36 connects the body portion 34 and the placement portion 35. In the Z direction, the gripping portion 36 protrudes from an upper surface (placement surface) 35t of the placement portion 35. The gripping portion 36 includes an acute-angled pointed portion 36a. The pointed portion 36a is positioned at a position higher than the upper surface 35t of the placement portion 35 and is positioned at a height of about 0.5 mm from the upper surface 35t of the placement portion 35.

When the slide glass 1 is transported by using the transport mechanism 30, a lower surface 1b of the slide glass 1 is placed on the upper surfaces 35t of the plurality of placement portions 35. The two side surfaces 1s of the short sides of the slide glass 1 are gripped by the plurality of gripping portions 36. More specifically, the slide glass 1 is gripped by the plurality of finger portions 33 by sandwiching two side surfaces 1s of the short sides of the slide glass 1 between the plurality of pointed portions 36a.

When the slide glass 1 is transported, the positions of the upper surfaces 35t of the plurality of placement portions 35 are the same positions. Accordingly, when the two side surfaces 1s of the short sides of the slide glass 1 are gripped by the plurality of gripping portions 36, the position of the slide glass 1 is kept horizontal.

### <Configuration of Placement Table>

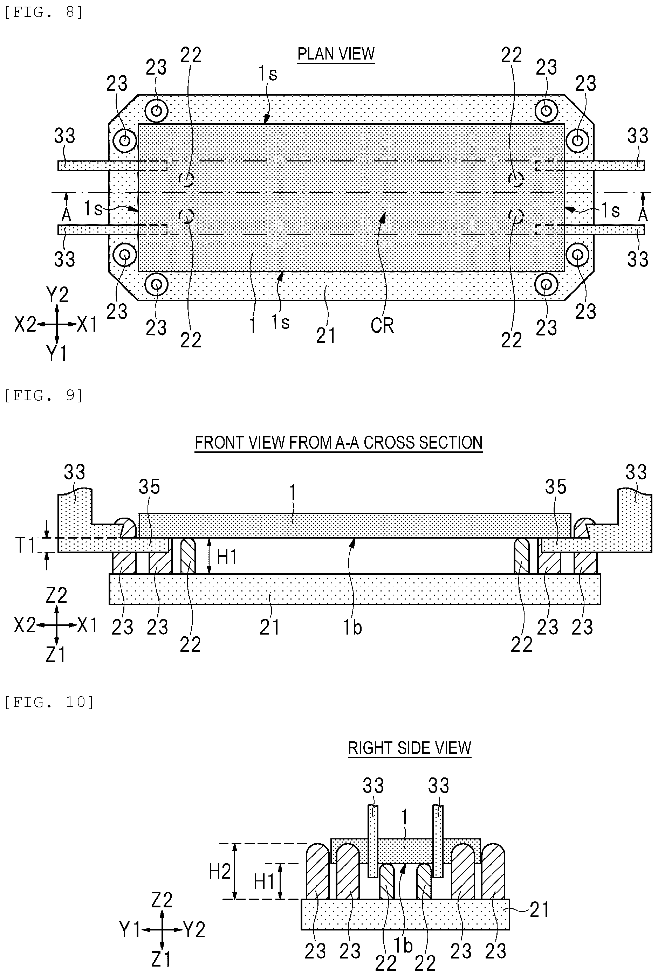

Hereinafter, the placement table 20 according to Embodiment 1 will be described with reference to FIGS. 8 to 10. FIGS. 8 to 10 show a positional relationship among the placement table 20, the finger portions 33, and the slide glass 1. FIG. 9 is a front view when viewed in the Y2 direction from a cross section taken along line AA shown in FIG. 8.

As shown in FIGS. 8 to 10, the placement table 20 according to Embodiment 1 includes a base 21, a plurality of support portions (support pins) 22, and a plurality of guide pins 23. The base 21 has an upper surface and a lower surface and has a flat plate shape. The plurality of support portions 22 and the plurality of guide pins 23 are provided on the upper surface of the base 21. The base 21, the plurality of support portions 22, and the plurality of guide pins 23 are made of, for example, stainless steel.

The base 21 has a polygonal shape in a plan view, and is implemented to have a size larger than that of the slide glass 1 to surround the slide glass 1 in a plan view. Therefore, the base 21 has two long sides along two long sides of the slide glass 1 and two short sides along two short sides of the slide glass **1.**

The slide glass 1 is placed on the plurality of support portions 22 of the placement table 20. The plurality of support portions 22 are provided to support the lower surface of the slide glass **1.** Each of the plurality of support portions 22 is formed in a cylindrical shape, and a tip end of each of the plurality of support portions 22 is processed into a hemispherical shape.

Since the slide glass 1 is supported at one point on a hemispherical surface, a contact area between the slide glass 1 and the support portion 22 is reduced, and an adhesive force between the slide glass 1 and the support portion 22 may be weakened. That is, the slide glass 1 can be prevented from adhering to the placement table 20. A radius of the hemispherical surface is preferably 2 mm or less.

Tip ends of the plurality of support portions 22 may have a conical shape. In this case, a tip end of a cone is preferably chamfered in consideration of safety. Even with the conical shape, the same effect as the spherical shape can be achieved.

In addition, the plurality of support portions 22 are provided in a number of at least three, and a polygon is formed by connecting the plurality of support portions as vertices with virtual straight lines in a plan view. In the example of FIG. 8, four support portions 22 are provided, and a quadrangle is formed by connecting the four support portions 22 as vertices with virtual straight lines.

One or more support portions 22 are provided at a position close to one of the two side surfaces 1s of the short sides of the slide glass 1, and one or more support portions 22 are provided at a position close to the other of the two side surfaces 1s of the short sides of the slide glass 1. Further, one or more support portions 22 are provided at a position close to one of the two side surfaces 1s of the long sides of the slide glass 1, and one or more support portions 22 are provided at a position close to the other of the two side surfaces 1s of the long sides of the slide glass 1.

The above feature can be restated in the base 21 instead of the slide glass 1. That is, one or more support portions 22 are provided at a position close to one of the two side surfaces of the short sides of the base 21, and one or more support portions 22 are provided at a position close to the other of the two side surfaces of the short sides of the base 21. Further, one or more support portions 22 are provided at a position close to one of the two side surfaces of the long sides of the base 21, and one or more support portions 22 are provided at a position close to the other of the two side surfaces of the long sides of the base 21.

By disposing the plurality of support portions 22 in this manner in a plan view, a center of gravity of the slide glass 1 is maintained, and the slide glass 1 is stably supported. In addition, in order to improve stability, the distance between the support portions 22 is preferably as long as possible, for example, 9 mm or more.

The plurality of guide pins 23 are each formed in a columnar shape, and are positioned closer to an outer peripheral side of the base 21 than the plurality of support portions 22. The plurality of guide pins 23 are used to surround each side surface 1s of the slide glass 1 in a plan view, and fix the position of the slide glass 1. Therefore, the height H2 of each of the plurality of guide pins 23 is greater than the height H1 of each of the plurality of support portions 22. The height H1 and the height H2 are heights from the upper surface of the base 21. The height H1 is, for example, 3 mm or more and 4 mm or less. The height H2 is, for example, 3.5 mm or more and 4.5 mm or less.

One or more guide pins 23 are provided at positions facing the respective side surfaces 1s of the slide glass 1. In the example of FIG. 8, eight guide pins 23 are provided, and two guide pins 23 are provided at positions facing the respective side surfaces 1s of the slide glass 1.

The distance between the support portion 22 and the guide pin 23 is restricted by a gap between the guide pin 23 and the slide glass 1. By making the distance between the support portion 22 and the guide pin 23 longer than the gap between the guide pin 23 and the slide glass 1, the slide glass 1 can be supported by the support portion 22 at any position surrounded by the guide pins 23.

### <Positional Relationship between Placement Table and Finger Portion>

A case in which the slide glass 1 placed on the plurality of support portions 22 is transported using the transport mechanism 30 or a case in which the slide glass 1 transported using the transport mechanism 30 is placed on the plurality of support portions 22 will be considered below.

In the above-described case, the placement portions 35 of the finger portions 33 need to pass through the space between the slide glass 1 and the base 21. Therefore, the height H1 of the plurality of support portions 22 needs to be larger than a thickness T1 of the placement portion 35. The thickness T1 of the placement portion 35 is, for example, 1 mm or more and 2 mm or less. As described above, the height H1 of the support portion 22 is, for example, 3 mm or more and 4 mm or less.

In the X direction, the length of the upper surface 35t of the placement portion 35 in contact with the lower surface 1b of the slide glass 1 is longer than the gap between the guide pin 23 and the slide glass 1. Accordingly, even if the slide glass 1 is placed at any position surrounded by the guide pins 23, the slide glass 1 can be stably placed by the placement portion 35.

The plurality of support portions 22 are provided in a region surrounded by a contact portion between the transport mechanism 30 (the finger portion 33) and the slide glass 1 in a plan view. In FIG. 8, such a region is shown as a closed region CR. The plurality of guide pins 23 are provided outside the closed region CR in a plan view. In other words, the finger portions 33 come into contact with the slide glass 1 at a position closer to the long side of the slide glass 1 than the plurality of support portions 22.

Therefore, when the placement portions 35 of the finger portions 33 lift the slide glass 1, even if the slide glass 1 and the support portion 22 are strongly adhered to each other due to paraffin or the like, a force with which the placement portion 35 lifts the slide glass 1 acts from the outside of the plurality of support portions 22, and thus a problem such as falling of the slide glass 1 is less likely to occur. That is, since the moments around the plurality of support portions 22 are balanced, the slide glass 1 is stably transported from the plurality of support portions 22 to the placement portion 35.

### <Transport Step of Slide Glass>

Hereinafter, a transport step of the slide glass 1 in Embodiment 1 will be described with reference to FIGS. 11A to 11E. A movement of the finger portions 33 in an up-down direction (the Z direction) is performed by the Z transport shaft 31z, and a movement of the finger portions 33 in a left-right direction (the X direction) is performed by the finger drive unit 32.

FIG. 11A shows a state in which the slide glass 1 is placed on the plurality of support portions 22 and a state before the finger portions 33 perform the gripping operation. As shown in FIG. 11A, the placement portions 35 of the finger portions 33 are positioned at a position higher than the upper surface of the slide glass 1 and are positioned so as not to overlap the slide glass 1 in a plan view. Accordingly, the finger portions 33 can be moved in the up-down direction without coming into contact with the slide glass **1.** Here, the state of the finger portions 33 is defined as an open state.

Next, as shown in FIG. 11B, the finger portions 33 are lowered such that the placement portion 35 is positioned between the lower surface of the slide glass 1 and the upper surface of the base 21.

Next, as shown in FIG. 11C, the finger portions 33 are moved in the X direction such that the placement portions 35 overlap a part of the slide glass 1 in a plan view, and the finger portions 33 are brought close to the slide glass **1.** At this time, the gripping portions 36 (pointed portions 36a) are not yet in contact with the slide glass **1.** Here, the state of the finger portions 33 is defined as a half-closed state.

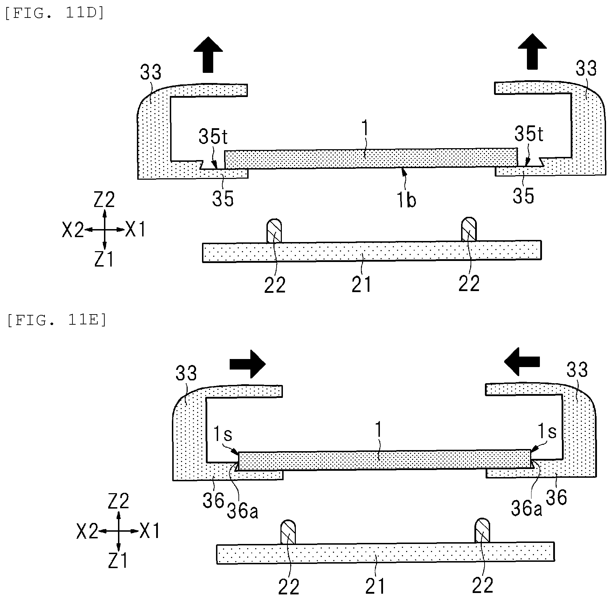

Next, as shown in FIG. 11D, the finger portions 33 are moved in the upper direction (the Z2 direction) such that the upper surfaces 35t of the placement portions 35 come into contact with the lower surface 1b of the slide glass 1. Further, by moving the finger portions 33 in the Z2 direction, the slide glass 1 is separated from the plurality of support portions 22.

Next, as shown in FIG. 11E, the finger portions 33 are moved in the X direction such that the gripping portions 36 (the pointed portions 36a) come into contact with the side surface 1s of the slide glass 1. Accordingly, the two side surfaces 1s of the short sides of the slide glass 1 are gripped by the plurality of gripping portions 36 (pointed portions 36a). Here, the state of the finger portions 33 is defined as a closed state.

Thereafter, by appropriately driving the X transport shaft 31x, the Y transport shaft 31y, and the Z transport shaft 31z, the slide glass 1 gripped by the finger portions 33 is transported to a desired position.

Although the case in which the slide glass 1 placed on the plurality of support portions 22 is transported by using the transport mechanism 30 is described here, when the slide glass 1 transported by using the transport mechanism 30 is placed on the plurality of support portions 22, the steps of FIGS. 11E, 11D, 11C, 11B, and 11A may be sequentially performed.

As described above, according to Embodiment 1, it is possible to provide the placement table 20 on which the slide glass 1 can be easily taken out by the transport mechanism 30. It is possible to provide the sample processing system 100 provided with such a placement table 20.

### (Modification)

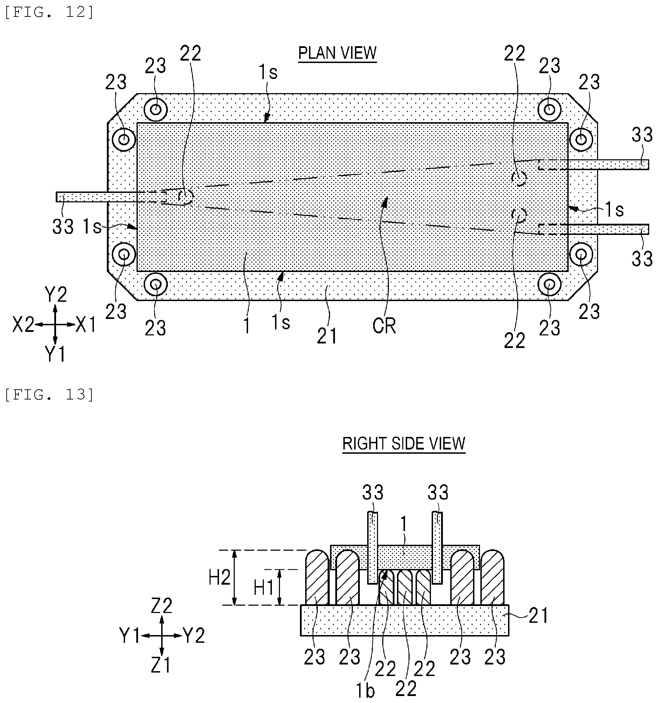

Hereinafter, the placement table 20 according to a modification of Embodiment 1 will be described with reference to FIGS. 12 and 13.

As shown in FIGS. 12 and 13, in the modification, three support portions 22 are provided, and a triangle is formed by connecting the three support portions 22 as vertices with virtual straight lines. As described above, when three or more support portions 22 are provided, the center of gravity of the slide glass 1 is maintained, and the slide glass 1 is stably supported.

In addition, in the modification, the three support portions 22 are also provided in the closed region CR surrounded by a contact portion between the transport mechanism 30 (the finger portion 33) and the slide glass 1 in a plan view. Therefore, since the moments around the three support portions 22 are balanced, the slide glass 1 is stably transported from the plurality of support portions 22 to the placement portion 35.

### (Embodiment 2)

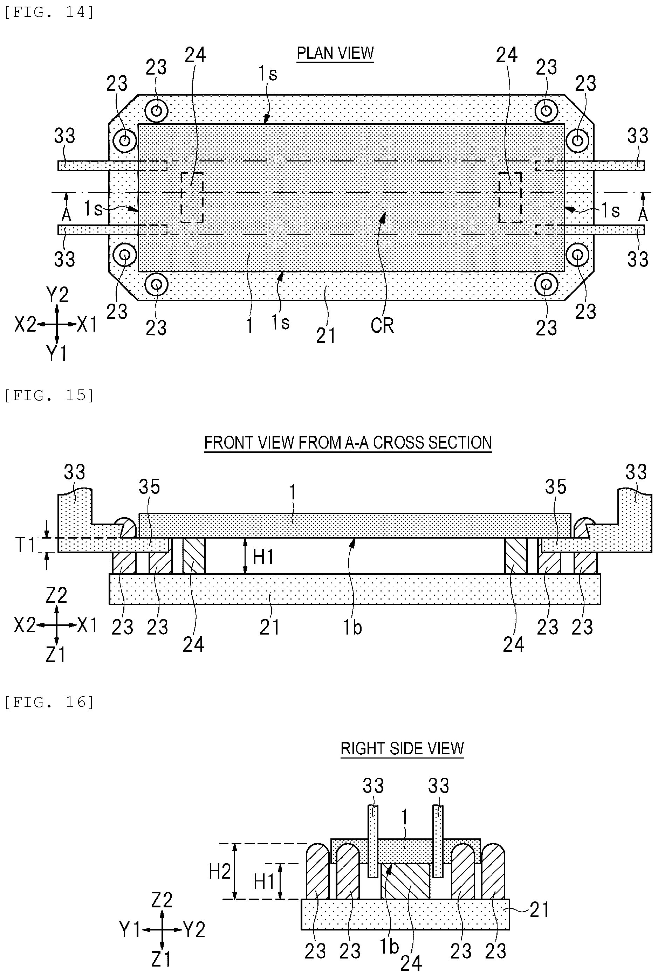

Hereinafter, the placement table 20 according to Embodiment 3 will be described with reference to FIGS. 14 to 16. In the following description, differences from Embodiment 1 will be mainly described, and descriptions of points overlapping those of Embodiment 1 will be omitted.

In Embodiment 1, the plurality of support portions 22 are each formed in a cylindrical shape, and the tip ends of the plurality of support portions 22 are each processed into a hemispherical shape.

As shown in FIGS. 14 to 16, in Embodiment 2, each of the plurality of support portions 24 is formed in a columnar shape, and the tip end of each of the plurality of support portions 24 is processed into a flat surface shape. In FIG. 14, two support portions 24 are provided, and each of the two support portions 24 is formed in a quadrangular prism shape. The plurality of support portions 24 are made of, for example, stainless steel.

In Embodiment 2, at least two support portions 24 are provided. One or more support portions 24 are provided at a position close to one of the two side surfaces 1s of the short sides of the slide glass 1, and one or more support portions 24 are provided at a position close to the other of the two side surfaces 1s of the short sides of the slide glass **1.** Further, each of the plurality of support portions 24 in Embodiment 2 extends in a direction (the Y1 direction and the Y2 direction) from the center of slide glass 1 toward two side surfaces 1s of the long sides of slide glass 1 in a plan view. Accordingly, the center of gravity of the slide glass 1 is maintained, and the slide glass 1 is stably supported.

The above feature can be restated in the base 21 instead of the slide glass **1.** That is, one or more support portions 24 are provided at a position close to one of the two side surfaces of the short sides of the base 21, and one or more support portions 24 are provided at a position close to the other of the two side surfaces of the short sides of the base 21. Further, each of the plurality of support portions 24 in Embodiment 2 extends in a direction (the Y1 direction and the Y2 direction) from the center of the base 21 toward two side surfaces of the long sides of the base 21 in a plan view.

Since the tip end of the support portion 24 is a flat surface, the contact area between the slide glass 1 and the support portion 24 is larger in Embodiment 2 than in Embodiment 1, and the adhesive force between the slide glass 1 and the support portion 24 is stronger. However, since the tip end of the support portion 24 is a flat surface, horizontal stability of the slide glass 1 can be improved as compared with Embodiment 1 when the slide glass 1 is placed on the support portion 24.

According to the findings obtained by the inventors of the present application through experiments, when the contact area between the slide glass 1 and each support portion 24 is 15 mm² or less for one support portion 24, the slide glass 1 can be stably lifted from the plurality of support portions 24 by the placement portions 35 even if the adhesive force between the slide glass 1 and the support portions 24 is relatively strong. In other words, a plane area of the tip end of one support portion 24 is 15 mm² or less.

In Embodiment 2, the plurality of support portions 24 are also provided in the closed region CR surrounded by the contact portion between the transport mechanism 30 (the finger portion 33) and the slide glass 1 in a plan view. Therefore, the moments around the plurality of support portions 24 are balanced.

As described above, in the placement table 20 according to Embodiment 2, the slide glass 1 can also be easily taken out by the transport mechanism 30.

### (Embodiment 3)

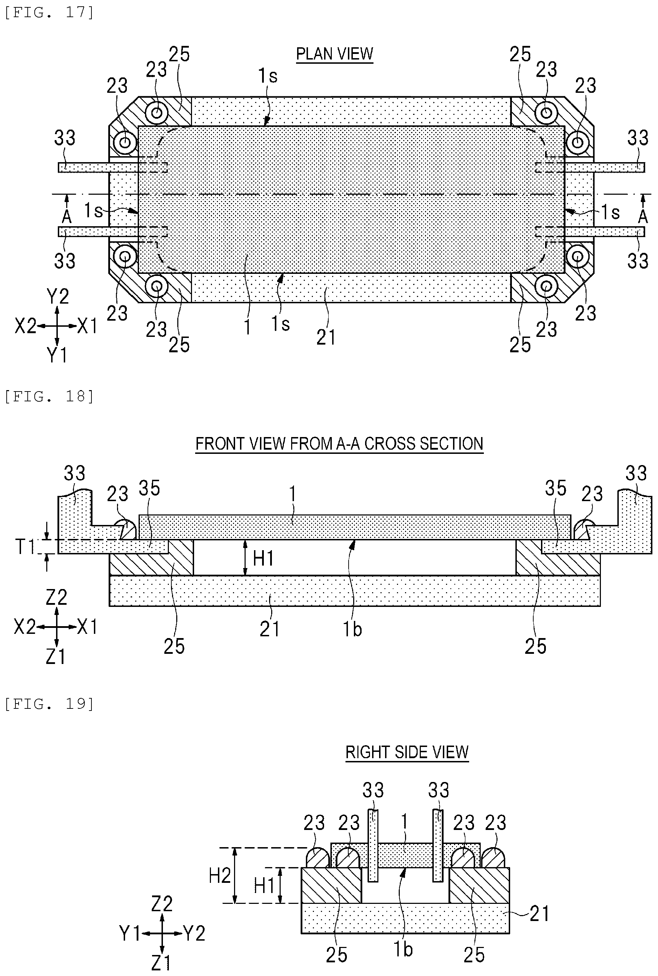

Hereinafter, the placement table 20 according to Embodiment 3 will be described with reference to FIGS. 17 to 19. In the following description, differences from Embodiment 1 will be mainly described, and descriptions of points overlapping those of Embodiment 1 will be omitted.

As shown in FIGS. 17 to 19, in Embodiment 3, a plurality of support tables 25 are used instead of the plurality of support portions 22. The plurality of support tables 25 are provided on the upper surface of the base 21 and are used to support the lower surface of the slide glass 1. The plurality of support tables 25 are provided at positions corresponding to respective corner portions of the rectangular-shaped slide glass 1. A height of the support table 25 is the same as the height H1 of the support portion 22 in Embodiment 1. The plurality of support tables 25 are made of, for example, stainless steel.

In Embodiment 3, the plurality of guide pins 23 are provided on upper surfaces of the plurality of support tables 25. Here, two guide pins 23 are provided on the upper surface of one support table 25. Planar positions of the plurality of guide pins 23 are the same as those in Embodiment 1.

The plurality of support tables 25 are provided outside the closed region CR surrounded by the contact portion between the transport mechanism 30 (the finger portion 33) and the slide glass 1 in a plan view. The upper surfaces of the plurality of support tables 25 are processed into flat surface shapes.

In Embodiment 3, when the placement portions 35 of the finger portions 33 lift the slide glass 1, when the slide glass 1 and the support tables 25 are strongly adhered to each other due to paraffin or the like, a force with which the placement portions 35 lift the slide glass 1 acts from the inside of the plurality of support tables 25, and thus a problem such as falling of the slide glass 1 is more likely to occur than in Embodiment 1.

However, according to the knowledge obtained by the inventors of the present application through experiments, when the contact area between the lower surface 1b of the slide glass 1 and the upper surface of each support table 25 is 15 mm² or less per support table **25,** the slide glass 1 can be stably lifted from the plurality of support tables 25 by the placement portions 35. Therefore, in the placement table 20 according to Embodiment **3,** the slide glass 1 can also be easily taken out by the transport mechanism **30.**

Although the invention has been specifically described based on the above-described embodiments, the invention is not limited to the above-described embodiments, and various modifications can be made without departing from the gist of the invention.

### Reference Signs List

1 slide glass
1b lower surface
1s side surface
1a identification code
10 inserting and storage unit
11 inserting mechanism
12 storage mechanism
13 slide tray
20 placement table
21 base
22 support portion
23 guide pin
24 support portion
25 support table
30 transport mechanism
31 transport drive unit
31x X transport shaft
31y Y transport shaft
31z Z transport shaft
32 finger drive unit
33 finger portion
34 body portion
35 placement portion
35t upper surface (placement surface)
36 gripping portion
36a pointed portion
40 staining unit
50 transport line
51 inserting line
51a guide
52 storage line
52a guide
53 actuator
100 sample processing system
CR closed region

## Claims

1. A placement table on which a slide glass transported by using a transport mechanism is to be mounted, the placement table comprising:
a base;
a plurality of support portions provided on the base and configured to support a lower surface of the slide glass; and
a plurality of guide pins provided on the base and configured to surround respective side surfaces of the slide glass, wherein
each of the plurality of guide pins is formed in a columnar shape.

2. The placement table according to claim **1,** wherein
each of the plurality of support portions is formed in a cylindrical shape, and
a tip end of each of the plurality of support portions is processed in a hemispherical shape.

3. The placement table according to claim **2,** wherein
the plurality of support portions are provided in a number of at least three, and
a polygon is formed by connecting the plurality of support portions as vertices with virtual straight lines in a plan view.

4. The placement table according to claim **3,** wherein
one or more of the support portions are provided at a position close to one of the two side surfaces of short sides of the slide glass, one or more of the support portions are provided at a position close to the other of the two side surfaces of the short sides of the slide glass, one or more of the support portions are provided at a position close to one of the two side surfaces of long sides of the slide glass, and one or more of the support portions are provided at a position close to the other of the two side surfaces of the long sides of the slide glass.

5. The placement table according to claim **1,** wherein
the plurality of support portions are provided in a number of at least two and each of the plurality of support portions is formed in a columnar shape, and
a plane area of a tip end of one of the plurality of support portions is 15 mm² or less.

6. The placement table according to claim **5,** wherein
one or more of the support portions are provided at a position close to one of the two side surfaces of short sides of the slide glass, one or more of the support portions are provided at a position close to the other of the two side surfaces of the short sides of the slide glass, and
each of the plurality of support portions extends in a direction from a center of the slide glass toward the two side surfaces of long sides of the slide glass in a plan view.

7. The placement table according to claim **1,** wherein
when the slide glass placed on the plurality of support portions is transported by using the transport mechanism or when the slide glass transported by using the transport mechanism is placed on the plurality of support portions, portions where the plurality of support portions come into contact with the slide glass are provided in a region surrounded by a contact portion between the transport mechanism and the slide glass in a plan view.

8. The placement table according to claim **7,** wherein
the transport mechanism includes a plurality of finger portions,
each of the plurality of finger portions includes a body portion, a placement portion, and a gripping portion connecting the body portion and the placement portion,
the gripping portion protrudes from an upper surface of the placement portion, and
when the slide glass is transported by using the transport mechanism,
the lower surface of the slide glass is placed on the upper surfaces of the plurality of placement portions, and the two side surfaces of short sides of the slide glass are gripped by the plurality of gripping portions.

9. A sample processing system provided with the placement table according to claim 7, the sample processing system comprising:
a plurality of the transport mechanisms;
a staining unit configured to perform staining processing on a sample mounted on the slide glass; and
an inserting and storage unit including an inserting mechanism configured to store the slide glass before the staining processing is performed and a storage mechanism configured to store the slide glass after the staining processing is performed, wherein
at least one of the transport mechanisms is provided in each of the inserting and storage unit and the staining unit,
a slide tray is provided in each of the inserting mechanism and the storage mechanism, and
a plurality of the placement tables are mounted on the slide tray.

10. The sample processing system according to claim 9, further comprising:
a transport line for transporting the slide glass between the inserting and storage unit and the staining unit, wherein
the placement table is mounted on the transport line, and
transport of the slide glass from the placement table of the inserting mechanism to the placement table of the transport line, transport of the slide glass from the placement table of the transport line to the staining unit, transport of the slide glass from the staining unit to the placement table of the transport line, and transport of the slide glass from the placement table of the transport line to the placement table of the storage mechanism are performed by the plurality of transport mechanisms.

11. A placement table on which a slide glass transported by using a transport mechanism is to be mounted, the placement table comprising:
a base;
a plurality of support tables provided on the base and configured to support a lower surface of the slide glass; and
a plurality of guide pins provided on the base and configured to surround respective side surfaces of the slide glass, wherein
the plurality of support tables are provided at positions corresponding to respective corner portions of the slide glass having a rectangular shape, and
a contact area between each of the plurality of support tables and the lower surface of the slide glass is 15 mm² or less.

12. The placement table according to claim 11, wherein
when the slide glass placed on the upper surface of the plurality of support tables is transported by using the transport mechanism, or when the slide glass transported by using the transport mechanism is placed on the upper surface of the plurality of support tables, the plurality of support tables are provided outside a region surrounded by a contact portion between the transport mechanism and the slide glass in a plan view.

13. The placement table according to claim 12, wherein
the transport mechanism includes a plurality of finger portions,
each of the plurality of finger portions includes a body portion, a placement portion, and a gripping portion connecting the body portion and the placement portion,
the gripping portion protrudes from an upper surface of the placement portion, and
when the slide glass is transported by using the transport mechanism,
the lower surface of the slide glass is placed on the upper surfaces of the plurality of placement portions, and the two side surfaces of short sides of the slide glass are gripped by the plurality of gripping portions.

14. A sample processing system provided with the placement table according to claim 13, the sample processing system comprising:
the transport mechanism;
a staining unit configured to perform staining processing on a sample mounted on the slide glass; and
an inserting and storage unit including an inserting mechanism configured to store the slide glass before the staining processing is performed and a storage mechanism configured to store the slide glass after the staining processing is performed, wherein
a slide tray is provided in each of the inserting mechanism and the storage mechanism, and
a plurality of the placement tables are mounted on the slide tray.

15. The sample processing system according to claim 14, further comprising:
a transport line for transporting the slide glass between the inserting and storage unit and the staining unit, wherein
the placement table is mounted on the transport line, and
transport of the slide glass from the placement table of the inserting mechanism to the placement table of the transport line, transport of the slide glass from the placement table of the transport line to the staining unit, transport of the slide glass from the staining unit to the placement table of the transport line, and transport of the slide glass from the placement table of the transport line to the placement table of the storage mechanism are performed by the transport mechanism.
